# EUROPEAN PATENT SPECIFICATION

(11) **EP 4 474 878 B1**
(45) Date of publication and mention of the grant of the patent: **19.08.2026**
(21) Application number: 24179812.3
(22) Date of filing: 04.06.2024
(51) Int. Cl.: G02B 6/44

(54) **BRACKET SYSTEM FOR CABLE MANAGEMENT IN AN EQUIPMENT RACK OF A FIBER OPTIC NETWORK AND METHOD OF INSTALLING A FIBER OPTIC CABLE IN AN EQUIPMENT RACK USING THE BRACKET SYSTEM**
HALTERUNGSSYSTEM FÜR KABELMANAGEMENT IN EINEM GERÄTEGESTELL EINES GLASFASERNETZES UND VERFAHREN ZUR INSTALLATION EINES GLASFASERKABELS IN EINEM GERÄTEGESTELL MIT DEM HALTERUNGSSYSTEM
SYSTÈME DE SUPPORT POUR LA GESTION DE CÂBLE DANS UN BÂTI D'ÉQUIPEMENT D'UN RÉSEAU DE FIBRES OPTIQUES ET PROCÉDÉ D'INSTALLATION D'UN CÂBLE À FIBRES OPTIQUES DANS UN BÂTI D'ÉQUIPEMENT

(30) Priority: 05.06.2023 US 202363471013 P
(43) Date of publication of application: 11.12.2024
(73) Proprietor: Corning Research & Development Corporation, Corning, New York 14831 (US)
(72) Inventor: SMITH, Joshua Thomas, North Carolina, 28117 (US)
(74) Representative: Reddie & Grose LLP

(56) References cited:
- US-A1- 2001 031 124
- US-A1- 2002 149 923
- US-A1- 2015 362 092
- US-B1- 6 307 997

## Description

### Priority Application

This application claims the benefit of priority of U.S. Provisional Application No. 63/471,013, filed on June 5, 2023.

### Technical Field

This disclosure relates generally to fiber optic cables, and more particularly to a cable management tool for organizing fiber optic cables in equipment racks of a fiber optic network. The disclosure also relates to a method of installing fiber optic cables in an equipment rack using the cable management tool.

### Background

The large amount of data and other information transmitted over the internet has led businesses and other organizations to develop large scale data centers for organizing, processing, storing and/or disseminating large amounts of data. Data centers contain a wide range of network equipment including, for example, servers, networking switches, routers, storage subsystems, etc. Data centers further include a large amount of cabling and equipment racks to organize and interconnect the network equipment in the data center. Modern data centers may include multibuilding campuses having, for example, one primary or main building and a number of auxiliary buildings in close proximity to the main building. All the buildings on the campus are interconnected by a local fiber optic network.

Data center design and cabling-infrastructure architecture are increasingly large and complex. To manage the interconnectivity of a data center, the network equipment within the buildings on the data center campus is often arranged in structured data halls having a large number of spaced-apart rows. Each of the rows is, in turn, configured to receive a number of equipment racks or cabinets (e.g., twenty racks or cabinets) which hold the network equipment. In some data center architectures, each of the rows includes a main patch panel at a front or head end of the row. Distribution cables with a relatively large number of optical fibers (high fiber counts) are routed from a building distribution frame (sometimes referred to as a main distribution frame) to the main patch panels (sometimes part of cabinets or equipment referred to as an intermediate distribution frame) for the different rows of equipment racks. At the main patch panels, a large number of distribution fiber optic cables with lower fiber counts are connected to the optical fibers of the associated high fiber count distribution cable(s) and routed along the row to connect to the network equipment held in the various racks in the row. To organize the large number of in-row distribution fiber optic cables, each row typically includes a cable tray or basket disposed above the row for supporting the distribution fiber optic cables as they extend along the row. The network equipment in the racks is optically connected to the distribution fiber optic cables by technicians during the construction of the data center using a large number of cables.

Recent equipment rack architectures include a main patch panel near the top of the equipment rack and a number of equipment patch panels (e.g., five, six or more patch panels) vertically arranged in the rack generally below the main patch panel in the equipment rack. Each of the equipment patch panels holds network equipment having connector ports which are to be optically connected to the distribution fiber optic cables extending along the row in the overhead cable trays. To achieve this connection, distribution fiber optic cables are routed to, for example, a rear of the main patch panel in the equipment rack. The network equipment in the multiple vertically arranged equipment patch panels is then connected to the front of the main patch panel via separate fiber optic cables.

Due to the large number of optical connections being made in the equipment rack, the routing of cables in the rack can often be chaotic and unorganized, which makes cable installation, cable tracing, cable replacement, troubleshooting, etc. nearly impossible. Accordingly, manufacturers continually strive to improve the interconnectivity within an equipment rack. It is believed that by providing equipment racks with enhanced cable management, labor, installation time, and related costs will be decreased.

US6307997B1 describes a termination block that retains a number of adapters to receive fiber optic cable connectors for interconnection and/or crossconnection with other connectors or switching equipment. The termination block has a mounting footprint that is substantially identical to the mounting footprint of an electrical punch-down block, thus permitting ease of retrofitting. Methods for mounting and retrofitting termination blocks are also described.

US2002/149923A1 describes a cable management bracket for a telecommunications rack. The bracket includes an elongated member having a length sized to extend across a width of the rack. A plurality of fingers project outwardly from the elongated member. The fingers are spaced apart along the length of the elongated member. Gaps sized to receive telecommunications cables are positioned between the fingers. Bend radius limiters are preferably connected to the fingers to prevent cables passing through the gaps from being bent beyond predetermined bend radius requirements.

### Summary

The invention is defined in the independent claims. Optional embodiments are defined in the dependent claims. In one aspect of the invention, a bracket system for an equipment rack of a fiber optic network for organizing a plurality of cable harnesses that provide optical connections to network equipment mounted in the equipment rack is disclosed. The bracket system includes a first bracket configured to be mounted to the equipment rack and a second bracket also configured to be mounted to the equipment rack in spaced relation to the first bracket. The first bracket includes a plurality of elongate furcation slots serially arranged along a first direction of the first bracket, where each of the plurality of elongate furcation slots extends along a second direction of the first bracket transverse to the first direction. The first bracket is configured to receive, in the plurality of elongate furcation slots, furcation housings of a plurality of cable harnesses. The second bracket includes a plurality of elongate leg slots serially arranged along a third direction of the second bracket, where each of the plurality of elongate leg slots extends along a fourth direction of the second bracket transverse to the third direction. The second bracket is configured to receive, in the plurality of elongate leg slots, breakout legs of the plurality of cable harnesses.

In one embodiment, the first bracket may include a base wall extending along the first direction and a plurality of elongate fingers extending from the base wall in the second direction. Each of the plurality of elongate furcation slots is formed by an adjacent pair of the plurality of elongate fingers. In one embodiment, each of the plurality of elongate fingers on the first bracket may be substantially the same length. Additionally, in one embodiment, each of the plurality of fingers on the first bracket may extend from the base wall in a cantilevered manner. In one embodiment, for example, each of the plurality of elongate fingers of the first bracket may include a base end connected to the base wall and a tip end spaced from the base wall, and each of the plurality of elongate furcation slots of the first bracket may include a base end closed off by the base wall and a tip end spaced from the base wall and open at the tip end. Moreover, in one embodiment, the second direction may be substantially perpendicular to the first direction such that the first bracket has a "comb" configuration.

In one embodiment, the second bracket may include a base wall extending along the third direction and a plurality of elongate fingers extending from the base wall in the fourth direction. Each of the plurality of elongate leg slots is formed by an adjacent pair of the plurality of elongate fingers. In one embodiment, each of the plurality of elongate fingers of the second bracket may have substantially the same length. Additionally, in one embodiment, each of the plurality of elongate fingers of the second bracket may extend from the base wall in a cantilevered manner. In one embodiment, for example, each of the plurality of elongate fingers of the second bracket may include a base end connected to the base wall and a tip end spaced from the base wall, and each of the plurality of elongate leg slots of the second bracket may include a base end closed off by the base wall and a tip end open at the tip end. Moreover, in one embodiment, the fourth direction may be substantially perpendicular to the third direction to provide a comb configuration. In one embodiment, the first bracket and the second bracket may be substantially identical to each other. In an alternative embodiment, however, the first bracket and second bracket may be different from each other. In one embodiment, for example, the second bracket may include one or more parking slots configured to receive nonconnected breakout legs of the cable harnesses. In another embodiment, the elongate fingers of the first bracket may have a length different from the length of the elongate fingers of the second bracket.

In another aspect of the disclosure, an equipment rack of a fiber optic network is disclosed. The equipment rack includes a plurality of equipment patch panels mounted in the equipment rack, where each of the plurality of equipment patch panels includes a plurality of connector ports. The equipment rack further includes a plurality of cable harnesses arranged in the equipment rack. Each of the plurality of cable harnesses includes a fiber optic cable carrying a plurality of optical fibers having a network end and a furcation end, the network end including at least one primary fiber optic connector terminating the plurality of optical fibers and configured to be connected to the fiber optic network. The cable harnesses further include a furcation housing having a cable end and a breakout end, the cable end of the furcation housing receiving the furcation end of the fiber optic cable and the plurality of optical fibers. The cable harnesses also include a plurality of breakout legs having a furcation end and a rack end. Each of the plurality of breakout legs is configured to carry at least one optical fiber of the plurality of optical fibers. The furcation end of each of the plurality of breakout legs is received in the breakout end of the furcation housing, the rack end of each of the plurality of breakout legs is terminated by at least one secondary fiber optic connector, and the plurality of secondary fiber optic connectors from the plurality of breakout legs is configured to be connected to connector ports in the plurality of equipment patch panels mounted in the equipment rack. The equipment rack further includes the bracket system according to the aspect described above mounted to the equipment rack. The first bracket and the second bracket are mounted to the equipment rack in spaced-apart relation to define a meshing region therebetween. The furcation housings of the plurality of cable harnesses are received in the plurality of elongate furcation slots in the first bracket and the breakout legs of the plurality of cable harnesses are received in the plurality of elongate leg slots in the second bracket. This system provides an organized arrangement of the cable harnesses and the large number of breakout legs accommodated in the equipment rack.

In one embodiment, the number of elongate leg slots in the second bracket may be no less than the number of equipment patch panels in the equipment rack. In one embodiment, each of the plurality of cable harnesses accommodated in the equipment rack may include at least one breakout leg that is connected to each of the plurality of equipment patch panels in the equipment rack. Additionally, in one embodiment, the second bracket may be arranged such that for each of the plurality of the equipment patch panels in the equipment rack there is a dedicated one of the plurality of elongate leg slots in the second bracket that receives the breakout legs that are optically connected to the respective one of the plurality of equipment patch panels. Thus, all the breakout legs in an elongate leg slot are configured to be connected to the same equipment patch panel in the equipment rack.

In one embodiment, the plurality of breakout legs in a respective one of the plurality of elongate leg slots in the second bracket may have substantially the same length. In an alternative embodiment, however, the plurality of breakout legs in different elongate leg slots of the plurality of elongate leg slots in the second bracket may have different lengths. In one embodiment, pairs of breakout legs of a cable harness may have the same length, but different pairs may have different lengths. For example, in one embodiment, pairs of breakout legs in a cable harness may have a progressively increasing length that corresponds to the vertically stacked equipment patch panels in the equipment rack.

In one embodiment, the furcation housings from the plurality of cable harnesses may be arranged in rows and columns in the plurality of elongate furcation slots in the first bracket. In this embodiment, the plurality of breakout legs from the cable harnesses in each row may be meshed to the plurality of elongate leg slots in the second bracket so as to reside in a common meshing plane. For example, the common meshing planes from each of the respective rows of cable harnesses in the first bracket may not intersect each other. In one embodiment, the meshing planes from respective rows of cable harnesses in the first bracket may be substantially parallel to each other (e.g., vertically arranged planes). In one embodiment, the first bracket and the second bracket may be vertically arranged relative to each other in the equipment rack such that the bracket system is located above the plurality of equipment patch panels.

In one embodiment, the equipment rack may further include a main patch panel mounted to the frame, such as near a top of the frame. The main patch panel may include a plurality of connector ports and the at least one primary connector from each of the plurality of cable harnesses may be connected to a respective one of the plurality of connector ports in the main patch panel. In one embodiment, main patch panel may be located generally above the plurality of equipment patch panels and may also be located above the bracket system.

In another aspect of the disclosure, a method of installing a cable harness in an equipment rack according to the aspect described above includes: i) positioning the furcation housing in one of the plurality of elongate furcation slots in the first bracket; ii) routing the plurality of breakout legs to one or more of the plurality of elongate leg slots in the second bracket; and iii) connecting the plurality of secondary connectors from the plurality of breakout legs to one or more of the plurality of equipment patch panels mounted in the equipment rack.

In one embodiment, routing the plurality of breakout legs may include routing the plurality of breakout legs to each of the plurality of elongate leg slots in the second bracket. In one embodiment, connecting the plurality of secondary connectors includes connecting the plurality of secondary connectors from the plurality of breakout legs to each of the plurality of equipment patch panels mounted in the equipment rack. In one embodiment, the method may include repeating steps i)-iii) to install a plurality of cable harnesses in the equipment rack. In one embodiment, routing the plurality of breakout legs to the second bracket may include routing the plurality of breakout legs to one or more of the plurality of elongate leg slots in the second bracket such that the plurality of breakout legs held in the same elongate leg slot in the second bracket is connected to a respective one of the plurality of equipment patch panels (i.e., the same equipment patch panel).

In one embodiment, the furcation housings from the plurality of cable harnesses may be arranged in a plurality of rows and columns in the first bracket, and for each respective row of the plurality of rows, the method may further include meshing the plurality of breakout legs from the cable harnesses in each respective row of the plurality of rows to the second bracket so as to lie within a common meshing plane. In one embodiment, meshing the plurality of breakout legs in each respective row so as to lie within the common meshing plane may further include meshing the plurality of breakout legs in each respective row so that the meshing planes from the respective rows do not intersect each other. In one particular embodiment, meshing the plurality of breakout legs in each respective row so as to lie within the common meshing plane may include meshing the plurality of breakout legs in each respective row so that the meshing planes from the respective rows may be substantially parallel to each other.

Additional features and advantages will be set forth in the detailed description which follows, and in part will be readily apparent to those skilled in the technical field of optical connectivity. It is to be understood that the foregoing general description, the following detailed description, and the accompanying drawings are merely exemplary and intended to provide an overview or framework to understand the nature and character of the claims.

### Brief Description of the Drawings

The accompanying drawings are included to provide a further understanding and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.
Fig. 1 is a schematic illustration of a data center campus.
Figs. 2 and 3 are partial perspective views of an exemplary data hall of the data center shown in Fig. 1.
Fig. 4 is an equipment rack having a cable management tool according to an embodiment of the disclosure.
Fig. 5 is an exemplary cable harness configured to be mounted in the equipment rack of Fig. 4 according to an embodiment of the disclosure.
Fig. 6 is a cross-sectional view of the cable harness shown in Fig. 5.
Fig. 7 is a partial enlarged front view of section 7 in Fig. 4 according to an embodiment of the disclosure.
Fig. 8 is a partial enlarged side view of the bracket system illustrated in Fig. 7.
Fig. 9 is a perspective view of the bracket system shown in Figs. 4, 7 and 8 without the cable harnesses.

### Detailed Description

Various embodiments will be further clarified by examples in the description below. In general, the description relates to a cable management tool for organizing the fiber optic cables used in an equipment rack of a fiber optic network. The cable management tool includes a bracket system having a pair of spaced apart brackets that facilitate organizing the fiber optic cables and their many breakout legs within the equipment rack. The first bracket includes a plurality of serially arranged slots that are configured to receive and hold the furcation housings of the fiber optic cables. The second bracket includes a plurality of serially arranged slots similar to that of the first bracket. The breakout legs extending from the furcation housings in the first bracket are distributed to the elongate slots of the second bracket according to a cable-routing architecture.

In an exemplary embodiment, the cable-routing architecture may call for each fiber optic cable in the equipment rack to have some breakout legs connected to each of the network equipment patch panels (which hold the network equipment) in the equipment rack. In this exemplary embodiment, each of the slots in the second bracket may be assigned to a dedicated one of the plurality of equipment patch panels in the equipment rack. During installation, the fiber optic cables may be installed in the first and second brackets in a row-by-row manner. This allows the breakout legs to be well organized within the equipment rack. More particularly, this process results in the breakout legs from the fiber optic cable being configured as a plurality of non-intersecting (e.g., parallel) meshing planes between the first and second brackets. This provides an organized and aesthetically pleasing arrangement of the fiber optic cables.

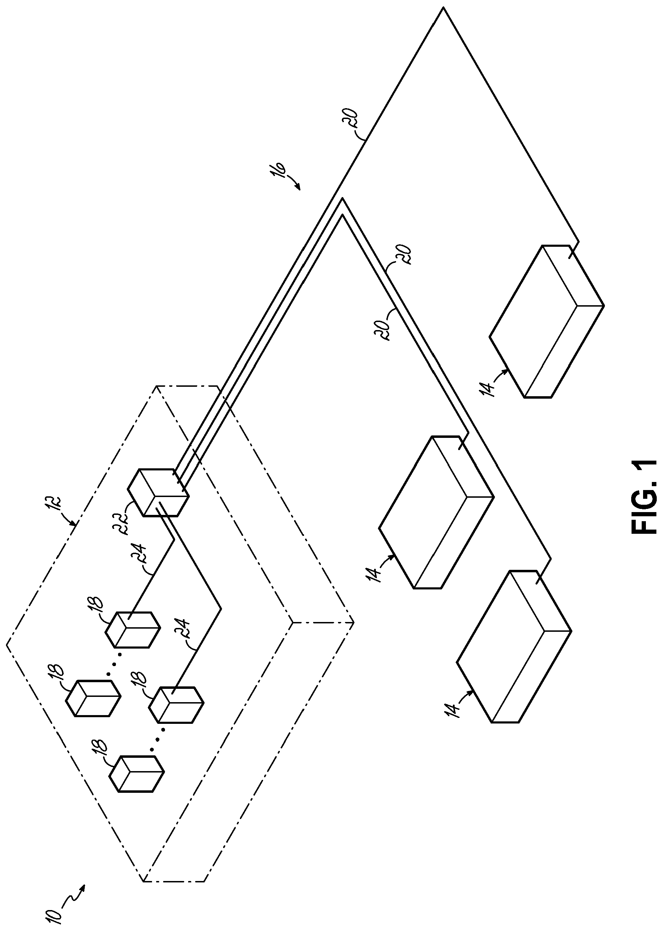

As illustrated in Fig. 1, a modern-day data center 10 may include a collection of buildings (referred to as a data center campus) having, for example, a main building 12 and one or more auxiliary buildings 14 in close proximity to the main building 12. While three auxiliary buildings are shown, there may be more or less depending on the size of the campus. The data center 10 provides for a local fiber optic network 16 that interconnects the auxiliary buildings 14 with the main building 12. The local fiber optic network 16 allows network equipment 18 in the main building 12 to communicate with various network equipment (not shown) in the auxiliary buildings 14. In the exemplary embodiment shown, the local fiber optic network 16 includes trunk cables 20 extending between the main building 12 and each of the auxiliary buildings 14. Conventional trunk cables 20 generally include a high fibercount arrangement of optical fibers for passing data and other information through the local fiber optic network 16. In the example illustrated in Fig. 1, the trunk cables 20 from the auxiliary buildings 14 are routed to one or more distribution cabinets 22 housed in the main building 12 (one shown).

Within the main building 12, a plurality of indoor fiber optic cables 24 ("indoor cables 24") are routed between the network equipment 18 and the one or more distribution cabinets 22. The indoor cables 24 generally include a high fibercount arrangement of optical fibers for passing data and other information from the distribution cabinets 22 to the network equipment 18. Although only the interior of the main building 12 is schematically shown in Fig. 1 and discussed above, each of the auxiliary buildings 14 may house similar equipment for similar purposes. Thus, although not shown, each of the trunk cables 20 may be routed to one or more distribution cabinets 22 in one of the auxiliary buildings 14 in a manner similar to that described above. Furthermore, each of the auxiliary buildings 14 may include indoor cables 24 that extend between network equipment 18 and the one or more distribution cabinets 22 of the auxiliary building 14.

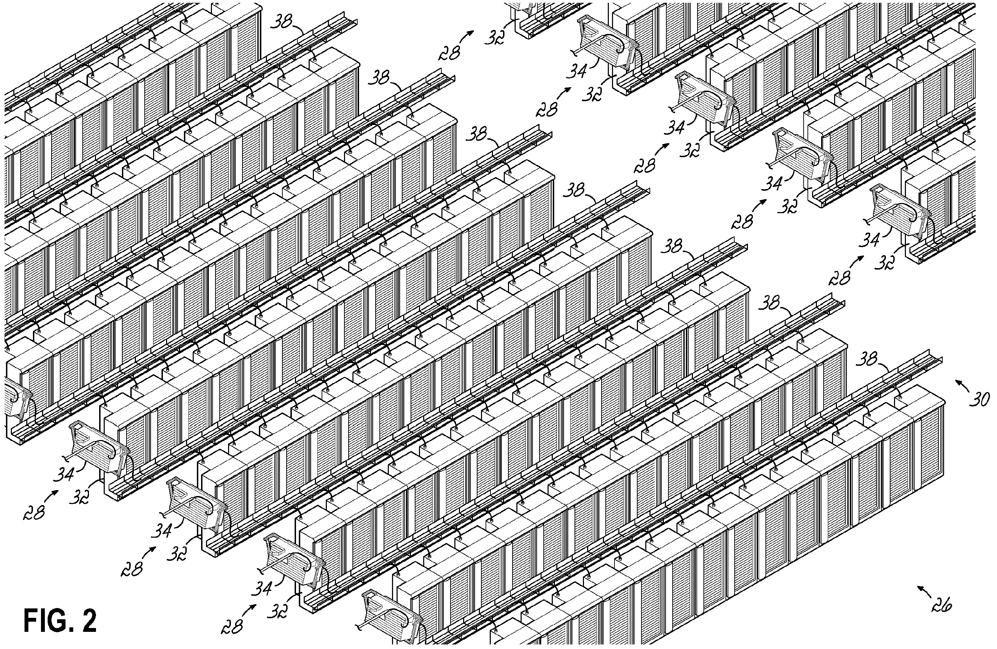

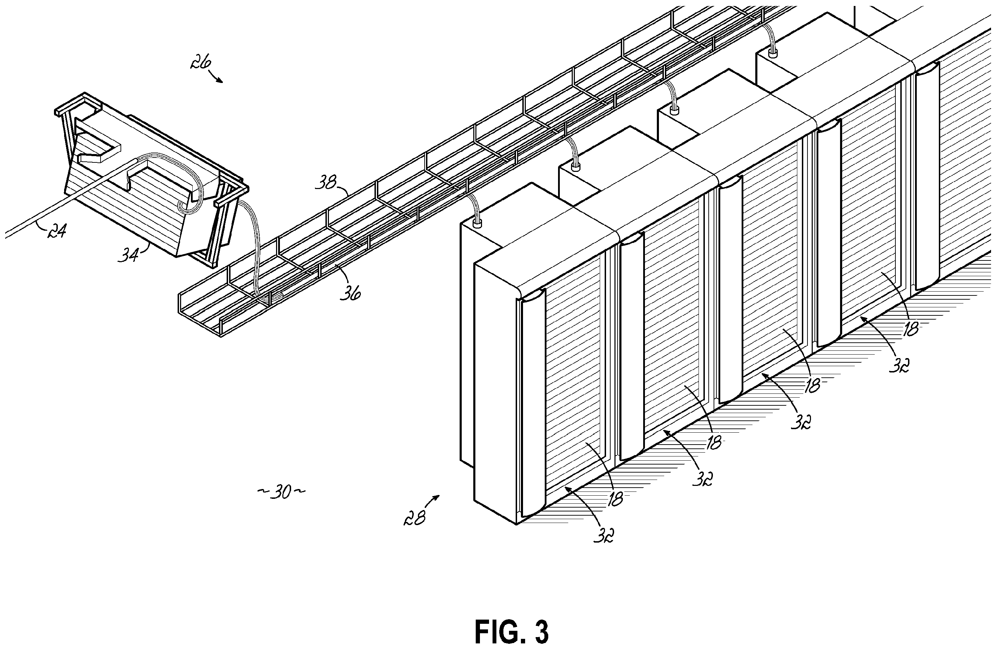

As illustrated in more detail in Figs. 2 and 3, the network equipment 18 in the main building 12 or an auxiliary building 14 may be arranged in one or more data halls 26 that generally include a plurality of spaced-apart rows 28 on one or both sides of an access pathway 30. The arrangement of the data halls 26 into rows 28 helps organize the large number of equipment, fiber optic cables, fiber optic connections, etc. Each of the rows 28 includes a plurality of equipment racks or cabinets 32 (referred to hereafter as "equipment racks 32" or "racks 32") generally arranged one next to the other along the row 28. Each of the equipment racks 32 is a vertically arranged framework for holding various network equipment 18 of the data center 10, as is generally known in the telecommunications industry. In one common arrangement, and as further illustrated in Fig. 2, each row 28 may include a main patch panel 34 at the head end of the row 28 closest to the access pathway 30. The main patch panel 34 represents a termination point of at least some of the optical fibers carried by one or more of the indoor cables 24, for example. Although the main patch panel 34 is shown as being positioned above the row 28, in other embodiments the patch panel 34 may be in a cabinet (not shown) at the head end of the row 28 or in the first equipment rack 32 at the head end of the row 28. In yet other embodiments, the main patch panel 34 may be located within the associated row, such as in the middle of the row, and be above, below, or within one of the equipment racks 32. As discussed above, in a conventional arrangement, one or more distribution cables 36 (only a representative one is shown in Figs. 2 and 3) are connected to the main patch panel 34 of a row 28 and routed along a cable tray 38 generally disposed above the row 28. The network equipment 18 in the equipment racks 32 is then optically connected to the one or more distribution cables 36 to provide the interconnectivity of the network equipment 18 of the data center 10.

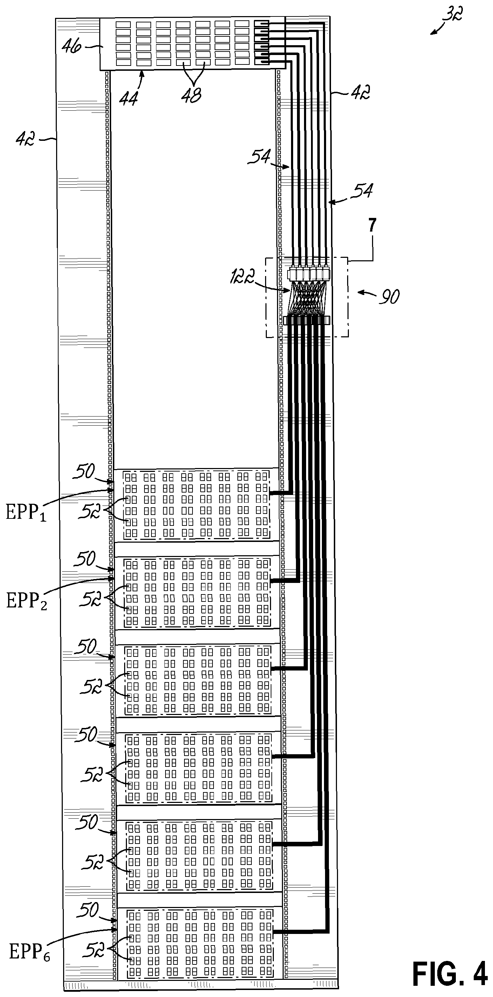

Fig. 4 illustrates an equipment rack 32 in accordance with an embodiment of the disclosure. The equipment rack 32 has a generally known construction and includes a plurality of vertical rails 42 that provide a framework for the equipment rack 32. In an exemplary embodiment, the equipment rack 32 includes a main patch panel 44 near a top of the equipment rack 32 that is configured to be connected to the one or more distribution cables 36 extending along the row 28 in the overhead cable trays 36. More particularly, the main patch panel 44 may include a rear interface (not shown) defining a plurality of connector interfaces or rear connector ports for making connections with the one or more distribution cables 36. The main patch panel 44 further includes a front interface 46 defining a plurality of front connector ports 48. Additionally, the equipment rack 32 typically includes a plurality of equipment patch panels 50 for receiving the network equipment 18 and securing the network equipment 18 to the rails 42 of the equipment rack 32. In one embodiment, for example, the equipment rack 32 may include six equipment patch panels 50; however, the number may vary depending on the rack architecture. In one embodiment, the equipment patch panels 50 are arranged below the main patch panel 44 in the equipment rack 32, but other arrangements may also be possible.

The network equipment 18 in each equipment patch panel 50 typically includes a plurality of connector ports 52 configured to be connected to connector ports 48 at the front interface 46 of the main patch panel 44 to thereby connect the network equipment 18 to the one or more row distribution cables 36. To this end, the equipment rack 32 includes a plurality of rack cable assemblies 54 (referred to hereafter as "rack cable harnesses 54" or "cable harnesses 54") that connect the connector ports 52 in the equipment patch panels 50 to the main patch panel 44 near the top of the equipment rack 32. Aspects of the disclosure are directed to a cable management tool for the equipment rack 32 (described in detail below) that provides routing of the cable harnesses 54 between the main patch panel 44 and the stacked equipment patch panels 50 in an organized manner.

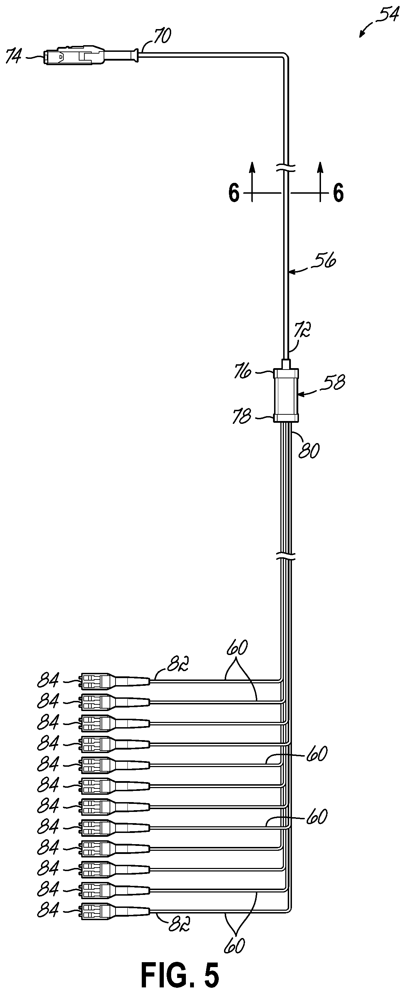

Before describing the cable management tool, however, it may be instructive to first describe the configuration of an exemplary cable harness 54 configured to be used to connect the connector ports 52 of the network equipment 18 in the equipment patch panels 50 to the connector ports 48 in the main patch panel 44 near the top of the equipment rack 32. Fig. 5, for example, illustrates an exemplary cable harness 54 in accordance with the disclosure. The cable harness 54 generally includes a fiber optic cable 56, a furcation housing 58, and a plurality of breakout legs 60. The fiber optic cable 56 carries a plurality of optical fibers for passing data and other information through the local fiber optic network 16, and more specifically between the one or more distribution cables 36 of a row 28 and the network equipment 18 in an equipment rack 32 of the row 28. The number of optical fibers carried by the fiber optic cable 56 and how the optical fibers are arranged within the fiber optic cable 56 may vary based on the application.

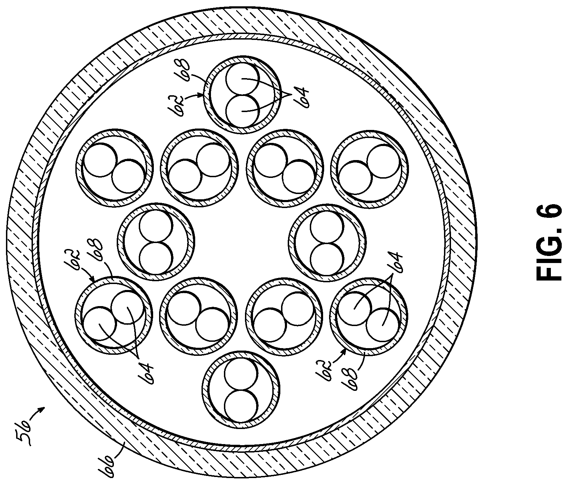

Fig. 6 illustrates one exemplary embodiment of the fiber optic cable 56 in accordance with the disclosure. More particularly, the fiber optic cable 56 includes a plurality of subunits 62, and each subunit 62 is configured to carry a pre-selected number of optical fibers 64. Although the fiber optic cable 56 is shown as including twelve subunits 62, the number of subunits 62 may be more or less than this number in alternative embodiments. The plurality of subunits 62 may be arranged within an outer protective sheath 66 ("outer jacket 66"), as is generally known in the industry. As mentioned above, each of the subunits 62 is configured to carry a pre-selected number of optical fibers 64. By way of example and without limitation, in an exemplary embodiment, each subunit 62 may be configured to carry two optical fibers 64 within a subunit outer jacket 68. Thus, in one embodiment, the cable harness 54 may carry twenty-four optical fibers 64. It should be recognized, however, that more or less optical fibers 64 may be carried by each of the subunits 62 and the fiber optic cable 56 in alternative embodiments. Additionally, in other embodiments, the fiber optic cable 56 may carry the optical fibers 64 within the outer jacket 66 in a loose configuration such that there are no subunit outer jackets 68.

In reference to Fig. 5, the fiber optic cable 56 of the cable harness 54 includes a network end 70 and a furcation end 72 opposite the network end 70. The network end 70 of the fiber optic cable 56 includes at least one primary fiber optic connector 74 terminating the optical fibers 64 in the fiber optic cable 56. As will be explained in more detail below, the at least one primary fiber optic connector 74 is configured to be connected to a connector port 48 associated with a main patch panel 44 in the equipment rack 32 (which is, in turn, connected to the one or more distribution cables 36 extending along the row 28 in the cable tray 38).

Any conventional, or yet to be developed, optical connector or connectorization scheme may be used in accordance with the present disclosure, including, but not limited to simplex or duplex connectors (e.g., LC connectors) and multi-fiber connectors (e.g., MPO connectors). For example, the at least one primary connector 74 may include MPO (multi-fiber push on) connectors, which are configured for multi-fiber cables including multiple sub-units of optical fibers (e.g., between four to 24 optical fibers). In other embodiments, the at least one primary connector 74 may be a different type of multi-fiber connector, such as an SN-MT connector commercially available from Senko Advanced Components, Inc. or an MMC connector commercially available from US Conec Ltd. In the exemplary embodiment shown in Fig. 5, the optical fibers 64 of the fiber optic cable 56 are terminated by one primary connector 74, with that primary connector 74 being configured as a 24-fiber MMC connector.

At the furcation end 72, the fiber optic cable 56 may extend into the furcation housing 58, where the outer jacket 66 of the fiber optic cable 56 is removed and the subunits 62 are broken or separated out into the plurality of breakout legs 60. As noted above, although the fiber optic cable 56 is shown as including twelve subunits 62, the number of subunits 62, and thus the number of breakout legs 60, may be more or less than this number in alternative embodiments. The furcation housing 58 includes a cable end 76 that receives the optical fibers 64 from the fiber optic cable 56 and a breakout end 78 from which the plurality of breakout legs 60 extend. Each of the plurality of breakout legs 60 includes a furcation end 80 received in the breakout end 78 of the furcation housing 58 and a rack end 82 opposite the furcation end 80. In some embodiments, the subunit outer jackets 68 of the fiber optic cable 56 may extend beyond the outer jacket 66 within the furcation housing 58, and then exit the furcation housing 58 to function as outer jackets for the breakout legs 60. In other embodiments, such as those in which the optical fibers 64 are not contained in subunit outer jackets 68 within the fiber optic cable 56, the breakout legs 60 may include their own outer jackets or tubes for protecting the optical fibers 64. Such tubes or outer jackets may have ends within furcation housing 58 for receiving the optical fibers 64 from the fiber optic cable 56, and then extend from the furcation housing 58 as portions of the breakout legs 60.

Still referring to Fig. 5, the rack end 82 of each of the plurality of breakout legs 60 includes at least one secondary fiber optic connector 84 terminating the optical fibers 64 in each of the breakout legs 60. As will be explained in more detail below, the at least one secondary fiber optic connector 84 is configured to be connected to a connector port 52 associated with the network equipment 18 in the equipment patch panels 50 in the equipment rack 32.

Similar to the above, any conventional, or yet to be developed, optical connector or connectorization scheme may be used in accordance with the present disclosure, including, but not limited to simplex or duplex connectors (e.g., LC connectors) and multi-fiber connectors (e.g., MPO, MMC, or SN-MT connectors). For example, each of the breakout legs 60 may be terminated by a secondary connector 84 configured as a duplex LC connector to correspond to the two optical fibers in each of the breakout legs 60 extending from the furcation housing 58. In other embodiments, the secondary connectors 84 may be a different type of duplex connector, such as an SN connector commercially available from Senko Advanced Components, Inc. or an MDC connector commercially available from US Conec Ltd.

As the fiber optic industry evolves, the desire for more and more optical connections within a fixed space, such as an equipment rack 32, continues to increase. By way of example and without limitation, some data center architectures are requiring equipment racks 32 that can accommodate over 2,000 optical connections in a single rack. Based on the exemplary cable harnesses 54 described above, to achieve such a high number of optical connections, the equipment rack 32 must accommodate ninety-six cable harnesses 54. Ninety-six cable harnesses 54 collectively include 1,152 breakout legs 60 (twelve breakout legs 60 per cable harness 54) that are routed to the equipment patch panels 50 in the equipment rack 32. As one can appreciate, managing and organizing such a high number of breakout legs 60 within a single equipment rack 32 are challenging. These tasks are even more challenging under some cable-routing architectures that require, for example, each of the cable harnesses 54 to have one or more breakout legs 60 connected to each of the equipment patch panels 50 in the equipment rack 32. In such a cable-routing architecture, the routing of the breakout legs 60 to the equipment patch panels 50 becomes intractable. This makes cable installation, cable replacement, cable tracking, etc. difficult and time consuming.

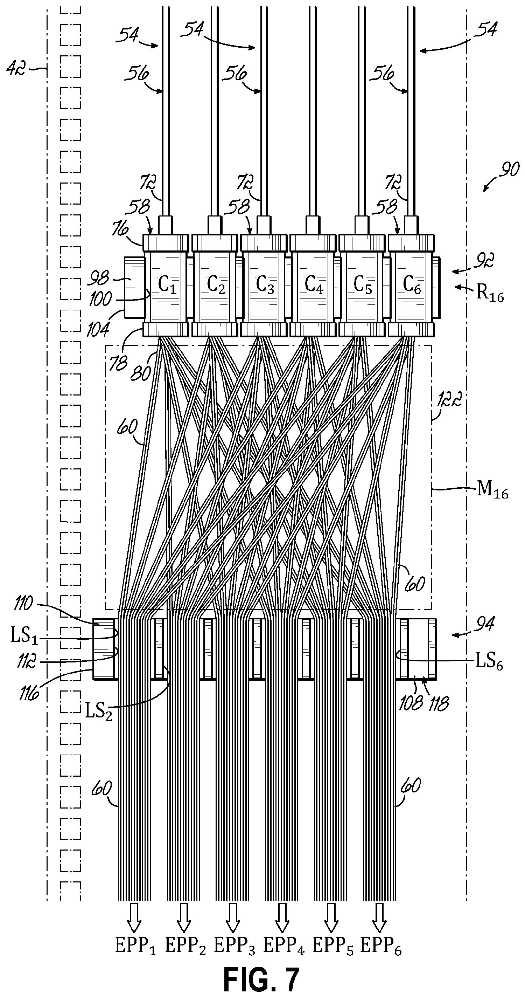

As illustrated in Fig. 4, and shown in more detail in Figs. 7-9, the equipment rack 32 includes a cable management tool to manage and organize the plurality of cable harnesses 54 that are to be accommodated in the equipment rack 32. In an exemplary embodiment, the cable management tool includes a bracket system 90 that includes a first bracket 92 configured to be mounted to the equipment rack 32 and a second bracket 94 also configured to be mounted to the equipment rack 32 in a generally aligned but spaced-apart relationship (Fig. 7). In one embodiment, the bracket system 90 may be vertically arranged in the equipment rack 32 with the first bracket 92 arranged generally vertically above the second bracket 94. In an alternative embodiment (not shown), however, the bracket system 90 may be horizontally arranged with the first and second brackets 92, 94 arranged in a generally side-by-side, spaced-apart manner. Additionally, while the bracket system 90 is illustrated by separate brackets 92, 94 individually mounted to the equipment rack 32, it should be appreciated that in an alternative embodiment, the first bracket 92 and second bracket 94 may be part of an assembly (e.g., such as a housing or box) and/or be unitary in its structure that is mounted to the equipment rack 32 as a unit (as opposed to individual elements or pieces). Thus, it should be appreciated that the bracket system 90 may have different orientations and configurations within the equipment rack 32 and remain within the scope of the present disclosure.

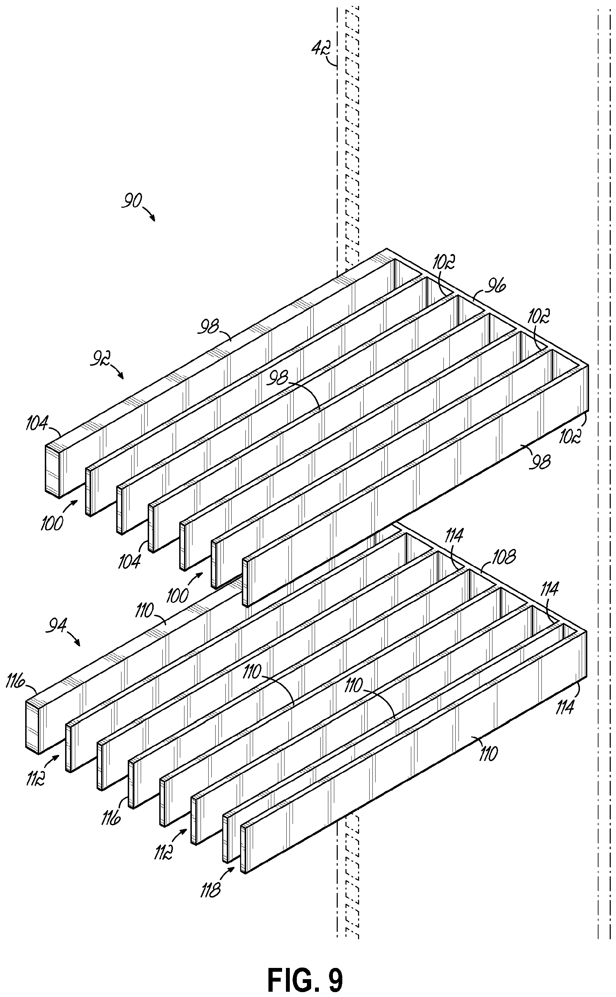

As best illustrated in Fig. 9, the first bracket 92 includes a base wall 96 connected to one of the vertical rails 42 or other vertical structure of the equipment rack 32 (e.g., with mounting connectors; not shown) along which the cable harnesses 54 are configured to be routed. A plurality of elongate fingers 98 extends from the base wall 96 in a generally parallel, spaced-apart, and cantilevered fashion to define a plurality of elongate furcation slots 100 between adjacent pairs of elongate fingers 98. More particularly, each of the elongate fingers 98 includes a base end 102 connected to the base wall 96 and a tip end 104 spaced therefrom. The base wall 96 closes off the plurality of elongate furcation slots 100 at a base end of the furcation slots 100. However, the plurality of elongate furcation slots 100 remains open at a tip end of the furcation slots 100. In one embodiment, the base wall 96 may extend in a first direction and the plurality of elongate fingers 98 may extend from the base wall 96 in a second direction transverse to the first direction. In one embodiment, for example, the plurality of elongate fingers 98 may extend in a second direction substantially perpendicular (e.g., +/- 5°) to the first direction. In another embodiment, however, the plurality of elongate fingers 98 may extend from the base wall 96 at an oblique or acute angle. In one embodiment, each of the plurality of elongate fingers 98 of the first bracket 92 may have the same length L₁. In an alternative embodiment (not shown), the plurality of elongate fingers 98 of the first bracket 92 may have different lengths.

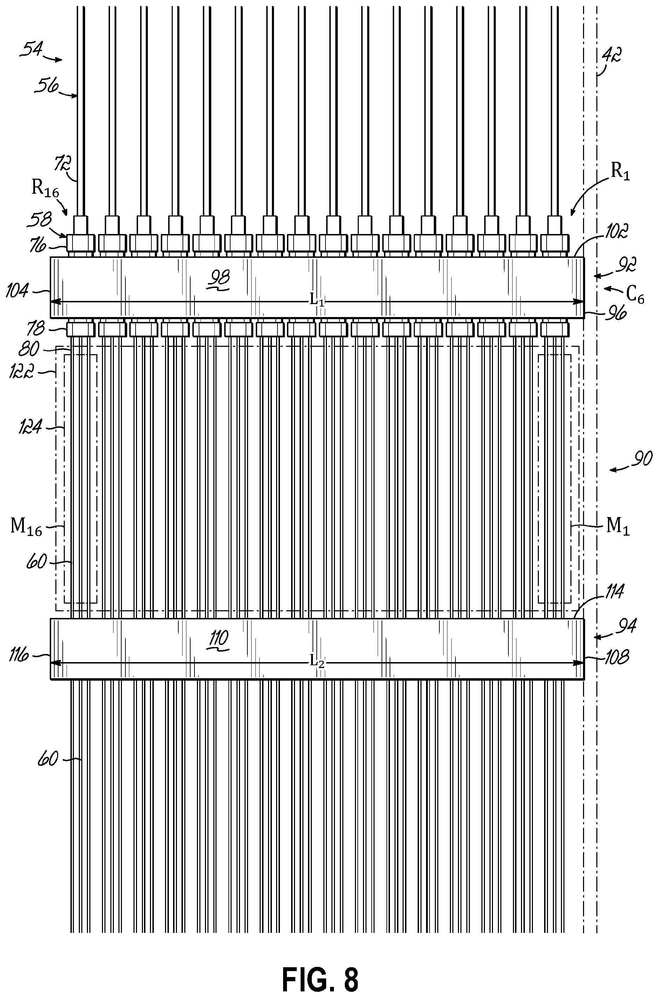

In one embodiment, the number of elongate furcation slots 100 defined by the first bracket 92 may correspond to the number of equipment patch panels 50 in the equipment rack 32. For example, in one embodiment, the first bracket 92 may include seven elongate fingers 98 that define six elongate furcation slots 100 that correspond to, for example, six different equipment patch panels 50 in the equipment rack 32 (Fig. 4). The number of equipment patch panels 50 and the number of elongate furcation slots 100 in the first bracket 92 may be more or less, however. As illustrated in Figs. 7 and 8, and as will be discussed below, each of the plurality of elongate furcation slots 100 is configured to hold a plurality of furcation housings 58 associated with the plurality of cable harnesses 54 accommodated in the equipment rack 32. The length L₁ of the elongate fingers 96, and the corresponding elongate slots 100, may depend on the number of cable harnesses 54 being accommodated in the equipment rack 32. For example, when ninety-six cable harnesses 54 are accommodated in the equipment rack 32, each of the elongate furcation slots 100 has a length configured to receive sixteen furcation housings 58 from respective cable harnesses 54 (Fig. 7).

In a similar manner and in reference to Fig. 9, the second bracket 94 includes a base wall 108 that connects to one of the vertical rails 42 or other vertical structure of the equipment rack 32 (e.g., with mounting connectors; not shown) along which the cable harnesses 54 are configured to be routed. A plurality of elongate fingers 110 extends from the base wall 108 in a generally parallel, spaced-apart, and cantilevered fashion to define a plurality of elongate leg slots 112 between adjacent pairs of elongate fingers 110. More particularly, each of the elongate fingers 110 includes a base end 114 connected to the base wall 108 and a tip end 116 spaced therefrom. The base wall 108 closes off the plurality of elongate leg slots 112 at a base end of the leg slots 112; however, the plurality of elongate leg slots 112 remains open at a tip end of the elongate leg slots 112. In one embodiment, the base wall 108 may extend in a third direction and the plurality of elongate fingers 110 may extend from the base wall 108 in a fourth direction transverse to the third direction. In one embodiment, for example, the plurality of elongate fingers 110 may extend in a fourth direction substantially perpendicular (e.g., +/- 5°) to the third direction. In another embodiment, however, the plurality of elongate fingers 110 may extend from the base wall 108 at an oblique or acute angle. In one embodiment, each of the plurality of elongate fingers 110 of the second bracket 94 may have the same length L₂. In an alternative embodiment (not shown), the plurality of elongate fingers 110 of the second bracket 94 may have different lengths.

In one embodiment, the number of elongate leg slots 112 defined by the second bracket 94 may similarly correspond to the number of equipment patch panels 50 in the equipment rack 32. For example, in one embodiment, the second bracket 94 may include seven elongate fingers 110 that define six elongate leg slots 112 that correspond to, for example, six different equipment patch panels 50 in the equipment rack 32 (Fig. 4). The number of equipment patch panels 50 and the number of elongate leg slots 112 in the second bracket 94 may be more or less, however.

In one embodiment, the first bracket 92 and the second bracket 94 may be substantially identical to each other, which may provide a manufacturing efficiency. In another embodiment, however, the first bracket 92 and the second bracket 94 may be different from each other. For example, in one embodiment shown in Fig. 9, the second bracket 94 may include an additional at least one elongate parking slot 118 (one shown) formed by an additional elongate finger 110 at a side thereof. The elongate parking slot 118 is configured to receive breakout legs 60 of the cable harnesses 54 that are not being actively connected to a connector port 52 in any of the equipment patch panels 50 of the equipment rack 32. As illustrated in Figs. 6 and 7, and as will be discussed below, each of the plurality of elongate leg slots 112 is configured to receive a plurality of breakout legs 60 from the plurality of cable harnesses 54 accommodated in the equipment rack 32. The length L₂ of the elongate fingers 110, and the corresponding elongate leg slots 112, may depend on the number of cable harnesses 54 being accommodated in the equipment rack 32 and the number of breakout legs 60 associated with each of the cable harnesses 54. For example, when ninety-six cable harnesses 54 are accommodated in the equipment rack 32, each of the elongate leg slots 112 may have a length configured to receive 196 breakout legs 60 from the plurality of cable harnesses 54.

As described above, when the first bracket 92 and the second bracket 94 are mounted to the equipment rack 32, the first and third directions of the base walls 96, 108 of the first and second brackets 92, 94, respectively, may be parallel to each other. In one embodiment, the base walls 96, 108 may also be coplanar. Similarly, when the first bracket 92 and the second bracket 94 are mounted to the equipment rack 32, the second and fourth directions of the elongate fingers 98, 110 of the first and second brackets 92, 94, respectively may also be parallel to each other (see Figs. 7 and 8). However, as described above, the first bracket 92 and second bracket 94 may be mounted to the equipment rack 32 in spaced-apart relation to each other to define a meshing region 122. In the meshing region 122, the breakout legs 60 from the plurality of cable harnesses 54 (held by their respective furcation housings 58 in the first bracket 94) are "meshed" or distributed to one or more of the elongate leg slots 112 in the second bracket 94 in accordance with a specific cable-routing architecture.

In one embodiment, and as mentioned above, the cable-routing architecture may require that one or more breakout legs 60 from each cable harness 54 connect to each of the plurality of equipment patch panels 50 in the equipment rack 32. In that embodiment, the bracket system 90 aids in managing and organizing the breakout legs 60 to achieve the desired cable-routing architecture. For example, where each cable harness 54 has one or more breakout legs 60 connected to each of the plurality of equipment patch panels 50 in the equipment rack 32, each elongate leg slot 112 of the second bracket 94 may be configured to receive the breakout legs 60 from all of the cable harnesses 54 that are configured to be connected to the same equipment patch panel 50 in the equipment rack 32.

As illustrated in Figs. 7 and 8, cable harnesses 54 are placed in the equipment rack 32 such that the furcation housings 58 of the cable harnesses 54 are held in the elongate furcation slots 100 of the first bracket 92 of the bracket system 90. For example, in one embodiment, the furcation slots 100 may have a width that generally corresponds to or is slightly larger than the width of the furcation housings 58 of the cable harnesses 54. This allows the furcation housings 58 to be inserted through the open tip end of the furcation slots 100 and slide along the slots 100 into their desired positions. In one exemplary embodiment, as illustrated in Figs. 7 an 8, for example, the furcation housings 58 may include at least one flange at an end of the furcation housing 58 (e.g., T-shaped) that, in turn, defines a shoulder (e.g., an annular shoulder) for engaging with a pair of elongate fingers 98, such as on an upper surface thereof, to support the furcation housings 58 in the first bracket 92. In the embodiment shown, the furcation housings 58 may include a pair of flanges at opposed ends of the furcation housings 58 (e.g., I-shaped) to provide orientation insensitivity relative to the cable harnesses 54.

When so held by the first bracket 92, the furcation housings 58 define rows R₁, R₂...Rₙ and columns C₁, C₂...Cₘ. In the exemplary embodiment described above, when the bracket system 90 is fully loaded with cable harnesses 54, the furcation housings 58 define sixteen rows R (n=16) and six columns C (m=6) in the first bracket 92. Fig. 7, for example, illustrates a view of the furcation housings 58 in the sixteenth row R₁₆ of the first bracket 92. In a similar manner, for example, Fig. 8 illustrates a view of the furcation housings 58 in the sixth column C₆ of the first bracket 92.

As noted above, the breakout legs 60 extending from the furcation housings 58 of the cable harnesses 54 held in the first bracket 92 are meshed to the plurality of elongate leg slots 112 in the second bracket 94. In an exemplary embodiment, the meshing of the breakout legs 60 may be done on a row-by-row basis according to the cable-routing architecture. Conducting the meshing of the breakout legs 60 in a row-by-row basis maintains the breakout legs 60 in an organized configuration. For example, meshing the breakout legs 60 from the furcation housings 58 on a row-by-row basis may provide a meshing region 122 defined by a plurality of meshing planes 124 spaced-apart along the length of the second bracket 94 (Fig. 8). More particularly, in one embodiment, meshing the breakout legs 60 on a row-by-row basis may result in the plurality of meshing planes 124 being non-intersecting, i.e., the breakout legs 60 in one meshing plane 124 do not intersect with the breakout legs 60 in another meshing plane 124. In another embodiment, meshing the breakout legs 60 on a row-by-row basis may result in the plurality of meshing planes 124 being substantially parallel to each other, as illustrated in Fig. 8.

Fig. 7, for example, illustrates the meshing of the breakout legs 60 from a row of furcation housings 58 (e.g., the sixteenth row R₁₆) in the first bracket 92 from a front view. Fig. 8, on the other hand, illustrates the meshing of the breakout legs 60 along a column of the furcation housing 58 (e.g., the sixth column C₆) in the first bracket 92 from a side view. From these figures, it is evident that the breakout legs 60 from a row R of furcation housings 58 in the first bracket 92 lie within a common meshing plane M. When the breakout legs 60 are meshed on a row-by-row basis, the meshing region 122 includes a plurality of meshing planes M₁, M₂...Mₙ spaced apart along the length of the second bracket 94 in the fourth direction and all substantially parallel to each other, such as all being vertically arranged and substantially perpendicular to the fourth direction. This provides a very organized arrangement of the breakout legs 60 of the cable harnesses 54 in the equipment rack 32 that improves cable installation, cable repair, cable tracing, etc. in the equipment rack 32.

As noted above, the number of elongate leg slots 112 in the second bracket 94 may correspond to the number of equipment patch panels 50 in the equipment rack 32. In one embodiment, for example, it may be beneficial to assign each elongate leg slot 112 in the second bracket 94 to a dedicated one of the plurality of equipment patch panels 50 in the equipment rack 32. For example, in one embodiment, and in reference to Figs. 4 and 7, the first leg slot LS₁ may be dedicated to the first equipment patch panel EPP₁; the second leg slot LS₂ may be dedicated to the second equipment patch panel EPP₂, and so on for each of the plurality of equipment patch panels 50 in the equipment rack 32. In this way, after the meshing of all the breakout legs 60 from the cable harnesses 54 held by the first bracket 92, all the breakout legs 60 received in the same elongate leg slot 112 will all go to the same equipment patch panel 50 in the equipment rack 32. Again, this assignment of the elongate leg slots 112 in the second bracket 94 results in a very organized arrangement of the breakout legs 60 of the cable harnesses 54 in the equipment rack 32.

As noted above, in one embodiment, the cable-routing architecture may call for at least one breakout leg 60 from each cable harness 54 to connect to each of the plurality of equipment patch panels 50 in the equipment rack 32. In one embodiment, for example, two breakout legs 60 may be configured to be connected to each of the plurality of equipment patch panels 50 in the equipment rack 32. Fig. 7 illustrates a meshing plane M₁₆ (of the last row R₁₆) for such an embodiment. As one can see, two breakout legs 60 from each furcation housing 58 in the row R₁₆ are received in each of the plurality of elongate leg slots 112 in the second bracket 94. By assigning the plurality of elongate leg slots 112 to dedicated equipment patch panels 50 as described above, then after routing all the breakout legs 60 in each of the rows R of furcation housings 58 in the first bracket 92, all the breakout legs 60 in each of the plurality of elongate leg slots 112 are coupled to a respective one of the plurality of equipment patch panels 50 to which they were assigned (i.e., the breakout legs 60 in an elongate leg slot 112 of the second bracket 94 are all connected to the same equipment patch panel 50). As noted above, this assignment of the elongate leg slots 112 in the second bracket 94 results in a very organized arrangement of the (large number) breakout legs 60 of the cable harnesses 54 in the equipment rack 32.

The arrangement provided above may provide additional benefits. For example, in one embodiment, each of the cable harnesses 54 may all have the same construction. This is advantageous, for example, from a manufacturing standpoint. In one embodiment, the length of the breakout legs 60 of the cable harnesses 54 may all have the same length. In this way, it may not matter which breakout leg 60 is positioned in any particular elongate leg slot 112 in the second bracket 94. In this embodiment, however, all the breakout legs 60 that are configured to be connected to the first (i.e., the top-most) equipment patch panel 50 in the equipment rack 32 are likely to have an excess amount of cable length that must be organized (e.g., coiled). This is because the length of the breakout legs 60 having the same cable configuration must not only be configured to reach the top-most equipment patch panel 50 in the equipment rack 32 but must also be configured to reach the bottom-most equipment patch panel 50 in the equipment rack 32. Thus, as one moves from the bottom-most equipment patch panel 50 to the top-most equipment patch panel 50 in the equipment rack 32, the amount of excess cable length in the breakout legs 60 configured to be connected to those equipment patch panels 50 progressively increases.

In an alternative embodiment, however, each of the plurality of cable harnesses 54 (which may still be identical to each other), may have breakout legs 60 that vary in length depending on, for example, the equipment patch panel 50 to which the breakout legs 60 are configured to be connected. For example, in the exemplary embodiment described above, the breakout legs 60 of each of the plurality of cable harnesses 54 may be divided into six pairs of breakout legs 60. Each pair of breakout legs 60 may have the same length but the different pairs of breakout legs 60 may have a progressively increasing length, i.e., a pair with the shortest length to a pair with the longest length. In this embodiment, the pair of breakout legs 60 with the shortest length may be placed into the elongate leg slot 112 of the second bracket 94 that corresponds to the top-most equipment patch panel 50 in the equipment rack 32 (thus requiring the shortest length in the breakout legs 60). Next the pair of breakout legs 60 with the next shortest length may be placed into the elongate leg slot 112 of the second bracket 94 that corresponds to the next top-most equipment patch panel 50 in the equipment rack 32. This process may continue to the pair of breakout legs 60 with the longest length being placed into the elongate leg slot 112 of the second bracket 94 that corresponds to the bottom-most equipment patch panel 50 in the equipment rack 32. In this way, because the breakout legs 60 of the cable harness 54 are designed to correspond to a particular equipment patch panel 60 location, the amount of excess length of the breakout legs 60 may be minimized and additional organizing steps to accommodate the excess length may be avoided. This provides an aesthetically pleasing, highly organized arrangement of the cable harnesses 64, and their associated breakout legs 60, in the equipment rack 32.

While the present disclosure has been illustrated by the description of specific embodiments thereof, and while the embodiments have been described in considerable detail, it is not intended to restrict or in any way limit the scope of the appended claims to such detail. The various features discussed herein may be used alone or in any combination within and between the various embodiments. Additional advantages and modifications will readily appear to those skilled in the art. The disclosure in its broader aspects is therefore not limited to the specific details, representative apparatus and methods and illustrative examples shown and described. For example, while the above described the bracket system in conjunction with a particular cable-routing architecture, it should be appreciated that the bracket system may provide benefits to organizing cable harnesses or other cable structures within an equipment rack according to other cable-routing architectures. Thus, aspects of the present disclosure should not be limited to the particular cable-routing architecture. Instead, it should be evident that departures may be made from such details without departing from the scope of the disclosure.

## Claims

1. A bracket system (90) for an equipment rack (32) of a fiber optic network for organizing a plurality of cable harnesses (54) that provide optical connections to network equipment mounted in the equipment rack (32), the bracket system (90) comprising:
a first bracket (92) configured to be mounted to the equipment rack (32), wherein the first bracket (92) includes a plurality of elongate furcation slots (100) arranged along a first direction of the first bracket (92), and wherein each of the plurality of elongate furcation slots (100) extends along a second direction of the first bracket (92) transverse to the first direction wherein the first bracket (92) is configured to receive, in the plurality of elongate furcation slots (100), furcation housings (58) of a plurality of cable harnesses (54); and
a second bracket (94) configured to be mounted to the equipment rack (32) in spaced relation to the first bracket (92), wherein the second bracket (94) includes a plurality of elongate leg slots (112) arranged along a third direction of the second bracket (94), and wherein each of the plurality of elongate leg slots (112) extends along a fourth direction of the second bracket (94) transverse to the third direction, wherein the second bracket (94) is configured to receive, in the plurality of elongate leg slots (112), breakout legs (60) of the plurality of cable harnesses (54).

2. The bracket system (90) of claim 1, wherein the first bracket (92) comprises:
a base wall (96) extending along the first direction; and
a plurality of elongate fingers (98) extending from the base wall (96), each of the plurality of elongate fingers (98) extending in the second direction,
wherein each of the plurality of elongate furcation slots (100) is formed by an adjacent pair of the plurality of elongate fingers (98).

3. The bracket system (90) of claim 2, wherein the furcation slots (100) have a width corresponding to or slightly larger than the width of the furcation housings (58) of the cable harnesses (54).

4. The bracket system (90) of claim 2, wherein each of the plurality of elongate fingers (98) of the first bracket (92) includes a base end connected to the base wall (96) and a tip end spaced from the base wall (96), wherein each of the plurality of elongate furcation slots (100) of the first bracket (92) includes a base end closed off by the base wall (96) and a tip end spaced from the base wall (96), and wherein each of the plurality of elongate furcation slots (100) of the first bracket (92) is open at the tip end.

5. The bracket system (90) of any of the preceding claims, wherein the second bracket (94) comprises:
a base wall (108) extending along the third direction; and
a plurality of elongate fingers (110) extending from the base wall (108), each of the plurality of elongate fingers (110) extending in the fourth direction,
wherein each of the plurality of elongate leg slots (112) is formed by an adjacent pair of the plurality of elongate fingers (110).

6. The bracket system (90) of claim 5, wherein each of the plurality of elongate fingers (110) of the second bracket (94) includes a base end connected to the base wall (108) and a tip end spaced from the base wall (108), wherein each of the plurality of elongate leg slots (112) of the second bracket (94) includes a base end closed off by the base wall (108) and a tip end spaced from the base wall (108), and wherein each of the plurality of elongate leg slots (112) of the second bracket (94) is open at the tip end.

7. The bracket system (90) of any of the preceding claims, wherein the second direction is substantially perpendicular to the first direction and/or the fourth direction is substantially perpendicular to the third direction.

8. The bracket system (90) of any of the preceding claims, wherein the first bracket (92) and the second bracket (94) are substantially identical to each other.

9. An equipment rack (32) of a fiber optic network, comprising:
a plurality of equipment patch panels mounted in the equipment rack (32), wherein each of the plurality of equipment patch panels includes a plurality of connector ports;
a plurality of cable harnesses (54) arranged in the equipment rack (32), wherein each of the plurality of cable harnesses (54) comprises:
a fiber optic cable (56) carrying a plurality of optical fibers and having a network end (70) and a furcation end (72), the network end (70) including at least one primary fiber optic connector terminating the plurality of optical fibers and configured to be connected to the fiber optic network;
a furcation housing (58) including a cable end and a breakout end, the cable end of the furcation housing (58) receiving the furcation end (72) of the fiber optic cable (56);
a plurality of breakout legs (60) having a furcation end (80) and a rack end, wherein each of the plurality of breakout legs (60) is configured to carry at least one optical fiber of the plurality of optical fibers, wherein the furcation end (80) of each of the plurality of breakout legs (60) is received in the breakout end of the furcation housing (58), wherein the rack end of each of the plurality of breakout legs (60) is terminated by at least one secondary fiber optic connector, and wherein the plurality of secondary fiber optic connectors from the plurality of breakout legs (60) is configured to be connected to connector ports in the plurality of equipment patch panels mounted in the equipment rack (32); and
the bracket system (90) of any of claims 1-8 mounted to the equipment rack (32), wherein the first bracket (92) and the second bracket (94) are mounted to the equipment rack (32) in spaced-apart relation to define a meshing region therebetween,
wherein the furcation housings (58) of the plurality of cable harnesses (54) are received in the plurality of elongate furcation slots (100) in the first bracket (92), and
wherein the breakout legs (60) of the plurality of cable harnesses (54) are received in the plurality of elongate leg slots (112) in the second bracket (94).

10. The equipment rack (32) of claim 9, wherein the number of elongate leg slots (112) in the second bracket (94) is no less than the number of equipment patch panels in the equipment rack (32).

11. The equipment rack (32) of claim 9 or 10, wherein each of the plurality of cable harnesses (54) includes at least one breakout leg (60) that is connected to each of the plurality of equipment patch panels in the equipment rack (32).

12. The equipment rack (32) of any of claims 9-11, wherein the second bracket (94) is arranged such that for each of the plurality of the equipment patch panels in the equipment rack (32) there is a dedicated one of the plurality of elongate leg slots (112) in the second bracket (94) that receives the breakout legs (60) that are optically connected to the respective one of the plurality of equipment patch panels.

13. The equipment rack (32) of any of claims 9-12, wherein the furcation housings (58) from the plurality of cable harnesses (54) are arranged in rows in the plurality of elongate furcation slots (100) in the first bracket (92), and wherein the plurality of breakout legs (60) from the cable harnesses (54) in each row is meshed to the plurality of elongate leg slots (112) in the second bracket (94) so as to reside in a common meshing plane.

14. The equipment rack of any of claims 9-13, wherein the equipment rack further comprises a main patch panel mounted to the frame, wherein the main patch panel includes a plurality of connector ports, and wherein the at least one primary connector from each of the plurality of cable harnesses is connected to a respective one of the plurality of connector ports in the main patch panel.

15. A method of installing a cable harness (54) in an equipment rack (32) of a fiber optic network, the cable harness (54) comprising:
a fiber optic cable (56) carrying a plurality of optical fibers and having a network end (70) and a furcation end (72), the network end (70) including at least one primary fiber optic connector terminating the plurality of optical fibers and configured to be connected to the fiber optic network;
a furcation housing (58) including a cable end and a breakout end, the cable end of the furcation housing (58) receiving the furcation end (72) of the fiber optic cable (56); and
a plurality of breakout legs (60) having a furcation end (80) and a rack end, wherein each of the plurality of breakout legs (60) is configured to carry at least one optical fiber of the plurality of optical fibers, wherein the furcation end (80) of each of the plurality of breakout legs (60) is received in the breakout end of the furcation housing (58), wherein the rack end of each of the plurality of breakout legs (60) is terminated by at least one secondary fiber optic connector,
the equipment rack (32) comprising the bracket system (90) of any of claims 9-14 mounted to the equipment rack (32), wherein the first bracket (92) and the second bracket (94) are mounted to the equipment rack (32) in spaced-apart relation to define a meshing region therebetween,
the method comprising:
i) positioning the furcation housing (58) in one of the plurality of elongate furcation slots (100) in the first bracket (92);
ii) routing the plurality of breakout legs (60) to one or more of the plurality of elongate leg slots (112) in the second bracket (94); and
iii) connecting the plurality of secondary connectors from the plurality of breakout legs (60) to one or more of the plurality of equipment patch panels mounted in the equipment rack (32).

## Patentansprüche

1. Halterungssystem (90) für einen Geräteträger (32) eines Glasfasernetzwerks zum Ordnen mehrerer Kabelbäume (54), die optische Verbindungen zu im Geräteträger (32) montierten Netzwerkgeräten bereitstellen, wobei das Halterungssystem (90) Folgendes umfasst:
eine erste Halterung (92), konfiguriert zur Montage am Geräteträger (32), wobei die erste Halterung (92) mehrere längliche Gabelungsschlitze (100) aufweist, die entlang einer ersten Richtung der ersten Halterung (92) angeordnet sind, und wobei sich jeder der mehreren länglichen Gabelungsschlitze (100) entlang einer zweiten Richtung der ersten Halterung (92) quer zur ersten Richtung erstreckt, wobei die erste Halterung (92) zum Aufnehmen, in den mehreren länglichen Gabelungsschlitzen (100), von Gabelungsgehäusen (58) mehrerer Kabelbäume (54) konfiguriert ist; und
eine zweite Halterung (94), konfiguriert zur Montage am Geräteträger (32) in beabstandeter Beziehung zur ersten Halterung (92), wobei die zweite Halterung (94) mehrere längliche Schenkelschlitze (112) aufweist, die entlang einer dritten Richtung der zweiten Halterung (94) angeordnet sind, und wobei sich jeder der mehreren länglichen Schenkelschlitze (112) entlang einer vierten Richtung der zweiten Halterung (94) quer zur dritten Richtung erstreckt, wobei die zweite Halterung (94) zur Aufnahme, in den mehreren länglichen Schenkelschlitzen (112), von Abzweigschenkeln (60) der mehreren Kabelbäume (54) konfiguriert ist.

2. Halterungssystem (90) nach Anspruch 1, wobei die erste Halterung (92) Folgendes umfasst:
eine Basiswand (96), die sich entlang der ersten Richtung erstreckt; und
mehrere längliche Finger (98), die sich von der Basiswand (96) erstrecken, wobei sich jeder der mehreren länglichen Finger (98) in der zweiten Richtung erstreckt,
wobei jeder der mehreren länglichen Gabelungsschlitze (100) durch ein benachbartes Paar der mehreren länglichen Finger (98) gebildet wird.

3. Halterungssystem (90) nach Anspruch 2, wobei die Gabelungsschlitze (100) eine Breite entsprechend der oder geringfügig größer als die Breite der Gabelungsgehäuse (58) der Kabelbäume (54) haben.

4. Halterungssystem (90) nach Anspruch 2, wobei jeder der mehreren länglichen Finger (98) der ersten Halterung (92) ein mit der Basiswand (96) verbundenes Basisende und ein von der Basiswand beabstandetes Spitzenende (96) aufweist, wobei jeder der mehreren länglichen Gabelungsschlitze (100) der ersten Halterung (92) ein durch die Basiswand (96) verschlossenes Basisende und ein von der Basiswand (96) beabstandetes Spitzenende aufweist, und wobei jeder der mehreren länglichen Gabelungsschlitze (100) der ersten Halterung (92) am Spitzenende offen ist.

5. Halterungssystem (90) nach einem der vorherigen Ansprüche, wobei die zweite Halterung (94) Folgendes umfasst:
eine sich entlang der dritten Richtung erstreckende Basiswand (108); und
mehrere längliche Finger (110), die sich von der Basiswand (108) erstrecken, wobei sich jeder der mehreren länglichen Finger (110) in der vierten Richtung erstreckt,
wobei jeder der mehreren länglichen Schenkelschlitze (112) durch ein benachbartes Paar der mehreren länglichen Finger (110) gebildet wird.

6. Halterungssystem (90) nach Anspruch 5, wobei jeder der mehreren länglichen Finger (110) der zweiten Halterung (94) ein mit der Basiswand (108) verbundenes Basisende und ein von der Basiswand (108) beabstandetes Spitzenende aufweist, wobei jeder der mehreren länglichen Schenkelschlitze (112) der zweiten Halterung (94) ein durch die Basiswand (108) verschlossenes Basisende und ein von der Basiswand (108) beabstandetes Spitzenende aufweist, und wobei jeder der mehreren länglichen Schenkelschlitze (112) der zweiten Halterung (94) am Spitzenende offen ist.

7. Halterungssystem (90) nach einem der vorherigen Ansprüche, wobei die zweite Richtung im Wesentlichen lotrecht zur ersten Richtung und/oder die vierte Richtung im Wesentlichen lotrecht zur dritten Richtung verläuft.

8. Halterungssystem (90) nach einem der vorherigen Ansprüche, wobei die erste Halterung (92) und die zweite Halterung (94) im Wesentlichen identisch sind.

9. Geräteträger (32) eines Glasfasernetzwerks, der Folgendes umfasst:
mehrere im Geräteträger (32) montierte Geräte-Patchfelder, wobei jedes der mehreren Geräte-Patchfelder mehrere Verbinderports umfasst;
mehrere im Geräteträger (32) angeordnete Kabelbäume (54), wobei jeder der mehreren Kabelbäume (54) Folgendes umfasst:
ein Glasfaserkabel (56), das mehrere Glasfasern führt und ein Netzwerkende (70) sowie ein Gabelungsende (72) aufweist, wobei das Netzwerkende (70) mindestens einen primären Glasfaserverbinder umfasst, der die mehreren Glasfasern abschließt und zum Anschließen an das Glasfasernetzwerk konfiguriert ist;
ein Gabelungsgehäuse (58) mit einem Kabelende und einem Abzweigende, wobei das Kabelende des Gabelungsgehäuses (58) das Gabelungsende (72) des Glasfaserkabels (56) aufnimmt;
mehrere Abzweigschenkel (60) mit einem Gabelungsende (80) und einem Trägerende, wobei jeder der mehreren Abzweigschenkel (60) zum Tragen mindestens einer der mehreren Glasfasern konfiguriert ist, wobei das Gabelungsende (80) jedes der mehreren Abzweigschenkel (60) im Abzweigende des Gabelungsgehäuses (58) aufgenommen ist, wobei das Trägerende jedes der mehreren Abzweigschenkel (60) durch mindestens einen sekundären Glasfaserverbinder abgeschlossen ist und wobei die mehreren sekundären Glasfaserverbinder der mehreren Abzweigschenkel (60) zum Anschließen an Verbinderports in den mehreren im Geräteträger (32) montierten Geräte-Patchfeldern konfiguriert sind; und
das am Geräteträger (32) montierte Halterungssystem (90) nach einem der Ansprüche 1-8, wobei die erste Halterung (92) und die zweite Halterung (94) in beabstandeter Beziehung am Geräteträger (32) montiert sind, um eine Ineinandergreifregion dazwischen zu definieren,
wobei die Gabelungsgehäuse (58) der mehreren Kabelbäume (54) in den mehreren länglichen Gabelungsschlitzen (100) in der ersten Halterung (92) aufgenommen sind und
wobei die Abzweigschenkel (60) der mehreren Kabelbäume (54) in den mehreren länglichen Gabelungsschlitzen (112) in der zweiten Halterung (94) aufgenommen sind.

10. Geräteträger (32) nach Anspruch 9, wobei die Anzahl der länglichen Schenkelschlitze (112) in der zweiten Halterung (94) nicht geringer ist als die Anzahl der Geräte-Patchfelder im Geräteträger (32).

11. Geräteträger (32) nach Anspruch 9 oder 10, wobei jeder der mehreren Kabelbäume (54) mindestens einen Abzweigschenkel (60) umfasst, der mit jedem der mehreren Geräte-Patchfelder im Geräteträger (32) verbunden ist.

12. Geräteträger (32) nach einem der Ansprüche 9-11, wobei die zweite Halterung (94) so angeordnet ist, dass für jedes der mehreren Geräte-Patchfelder im Geräteträger (32) ein dedizierter der mehreren länglichen Schenkelschlitze (112) in der zweiten Halterung (94) vorhanden ist, der die Abzweigschenkel (60) aufnimmt, die optisch mit dem jeweiligen der mehreren Geräte-Patchfelder verbunden sind.

13. Geräteträger (32) nach einem der Ansprüche 9-12, wobei die Gabelungsgehäuse (58) von den mehreren Kabelbäumen (54) in Reihen in den mehreren länglichen Gabelungsschlitzen (100) in der ersten Halterung (92) angeordnet sind, und wobei die mehreren Abzweigschenkel (60) der Kabelbäume (54) in jeder Reihe mit den mehreren länglichen Schenkelschlitzen (112) in der zweiten Halterung (94) ineinandergreifen, so dass sie in einer gemeinsamen Ineinandergreifebene liegen.

14. Geräteträger nach einem der Ansprüche 9-13, wobei der Geräteträger ferner ein am Rahmen montiertes Hauptpatchfeld umfasst, wobei das Hauptpatchfeld mehrere Verbinderports aufweist, und wobei der mindestens eine primäre Verbinder von jedem der mehreren Kabelbäume mit einem jeweiligen der mehreren Verbinderports im Hauptpatchfeld verbunden ist.

15. Verfahren zum Installieren eines Kabelbaums (54) in einen Geräteträger (32) eines Glasfasernetzwerks, wobei der Kabelbaum (54) Folgendes umfasst:
ein Glasfaserkabel (56), das mehrere Glasfasern trägt und ein Netzwerkende (70) sowie ein Gabelungsende (72) aufweist, wobei das Netzwerkende (70) mindestens einen primären Glasfaserverbinder umfasst, der die mehreren Glasfasern abschließt und zum Anschließen an das Glasfasernetzwerk konfiguriert ist;
ein Gabelungsgehäuse (58) mit einem Kabelende und einem Abzweigende, wobei das Kabelende des Gabelungsgehäuses (58) das Gabelungsende (72) des Glasfaserkabels (56) aufnimmt; und
mehrere Abzweigschenkel (60) mit einem Gabelungsende (80) und einem Trägerende, wobei jeder der mehreren Abzweigschenkel (60) zum Tragen mindestens einer der mehreren Glasfasern konfiguriert ist, wobei das Gabelungsende (80) jedes der mehreren Abzweigschenkel (60) im Abzweigende des Gabelungsgehäuses (58) aufgenommen ist, wobei das Trägerende jedes der mehreren Abzweigschenkel (60) durch mindestens einen sekundären Glasfaserverbinder abgeschlossen ist,
wobei der Geräteträger (32) das am Geräteträger (32) montierte Halterungssystem (90) nach einem der Ansprüche 9-14 umfasst, wobei die erste Halterung (92) und die zweite Halterung (94) in beabstandeter Beziehung am Geräteträger (32) angebracht sind, um eine Ineinandergreifregion dazwischen zu definieren,
wobei das Verfahren Folgendes beinhaltet:
i) Positionieren des Gabelungsgehäuses (58) in einem der mehreren länglichen Gabelungsschlitze (100) in der ersten Halterung (92);
ii) Verlegen der mehreren Abzweigschenkel (60) in einen oder mehrere der mehreren länglichen Schenkelschlitze (112) in der zweiten Halterung (94); und
iii) Verbinden der mehreren sekundären Verbinder der mehreren Abzweigschenkel (60) mit einem oder mehreren der mehreren im Geräteträger (32) montierten Geräte-Patchfelder.

## Revendications

1. Système de supports (90) pour un bâti d'équipement (32) d'un réseau de fibres optiques pour organiser une pluralité de faisceaux de câbles (54) qui fournissent des connexions optiques à un équipement de réseau monté dans le bâti d'équipement (32), le système de supports (90) comprenant :
un premier support (92) configuré pour être monté sur le bâti d'équipement (32), dans lequel le premier support (92) comporte une pluralité d'emplacements de bifurcation allongés (100) disposés le long d'une première direction du premier support (92), et dans lequel chacun de la pluralité d'emplacements de bifurcation allongés (100) s'étend le long d'une deuxième direction du premier support (92) transversale à la première direction, dans lequel le premier support (92) est configuré pour recevoir, dans la pluralité d'emplacements de bifurcation allongés (100), des boîtiers de bifurcation (58) d'une pluralité de faisceaux de câbles (54) ; et
un second support (94) configuré pour être monté sur le bâti d'équipement (32) en une relation espacée avec le premier support (92), dans lequel le second support (94) comporte une pluralité d'emplacements de pattes allongés (112) disposées le long d'une troisième direction du second support (94), et dans lequel chacune de la pluralité d'emplacements de pattes allongés (112) s'étend le long d'une quatrième direction du second support (94) transversale à la troisième direction, dans lequel le second support (94) est configuré pour recevoir, dans la pluralité d'emplacements de pattes allongés (112), des pattes de dérivation (60) de la pluralité de faisceaux de câbles (54).

2. Système de supports (90) selon la revendication 1, dans lequel le premier support (92) comprend :
une paroi de base (96) s'étendant dans la première direction ; et
une pluralité de doigts allongés (98) s'étendant depuis la paroi de base (96), chacun de la pluralité de doigts allongés (98) s'étendant dans la deuxième direction,
dans lequel chacun de la pluralité d'emplacements de bifurcation allongés (100) est formé par une paire adjacente de la pluralité de doigts allongés (98).

3. Système de supports (90) selon la revendication 2, dans lequel les emplacements de bifurcation (100) ont une largeur égale ou légèrement supérieure à la largeur des boîtiers de bifurcation (58) des faisceaux de câbles (54).

4. Système de supports (90) selon la revendication 2, dans lequel chacun de la pluralité de doigts allongés (98) du premier support (92) comporte une extrémité de base connectée à la paroi de base (96) et une extrémité de pointe espacée de la paroi de base (96), dans lequel chacun de la pluralité d'emplacements de bifurcation allongés (100) du premier support (92) comporte une extrémité de base fermée par la paroi de base (96) et une extrémité de pointe espacée de la paroi de base (96), et dans lequel chacun de la pluralité d'emplacements de bifurcation allongés (100) du premier support (92) est ouvert à l'extrémité de pointe.

5. Système de supports (90) selon l'une quelconque des revendications précédentes, dans lequel le second support (94) comprend :
une paroi de base (108) s'étendant dans la troisième direction ; et
une pluralité de doigts allongés (110) s'étendant depuis la paroi de la base (108), chacun de la pluralité de doigts allongés (110) s'étendant dans la quatrième direction,
dans lequel chacun de la pluralité d'emplacements de pattes allongés (112) est formé par une paire adjacente de la pluralité de doigts allongés (110).

6. Système de supports (90) selon la revendication 5, dans lequel chacun de la pluralité de doigts allongés (110) du second support (94) comprend une extrémité de base connectée à la paroi de base (108) et une extrémité de pointe espacée de la paroi de base (108), dans lequel chacun de la pluralité d'emplacements de pattes allongés (112) du second support (94) comprend une extrémité de base fermée par la paroi de base (108) et une extrémité de pointe espacée de la paroi de base (108), et dans lequel chacun de la pluralité d'emplacements de pattes allongés (112) du second support (94) est ouvert à l'extrémité de pointe.

7. Système de supports (90) selon l'une quelconque des revendications précédentes, dans lequel la deuxième direction est sensiblement perpendiculaire à la première direction et/ou la quatrième direction est sensiblement perpendiculaire à la troisième direction.

8. Système de supports (90) selon l'une quelconque des revendications précédentes, dans lequel le premier support (92) et le second support (94) sont sensiblement identiques.

9. Bâti d'équipement (32) d'un réseau de fibres optiques, comprenant :
une pluralité de panneaux de répartition d'équipement montés dans le bâti d'équipement (32), dans lequel chacun de la pluralité de panneaux de répartition d'équipement comprend une pluralité de ports de connexion ;
une pluralité de faisceaux de câbles (54) agencés dans le bâti d'équipement (32), dans lequel chacun de la pluralité de faisceaux de câbles (54) comprend :
un câble de fibres optiques (56) convoyant une pluralité de fibres optiques et présentant une extrémité réseau (70) et une extrémité bifurcation (72), l'extrémité réseau (70) comprenant au moins un connecteur de fibres optiques primaire terminant la pluralité de fibres optiques et configuré pour être connecté au réseau de fibres optiques ;
un boîtier de bifurcation (58) comportant une extrémité câble et une extrémité dérivation, l'extrémité câble du boîtier de bifurcation (58) recevant l'extrémité bifurcation (72) du câble de fibres optiques (56) ;
une pluralité de pattes de dérivation (60) présentant une extrémité bifurcation (80) et une extrémité bâti, dans lequel chacune de la pluralité de pattes de dérivation (60) est configurée pour porter au moins une fibre optique parmi la pluralité de fibres optiques, dans lequel l'extrémité bifurcation (80) de chacune de la pluralité de pattes de dérivation (60) est reçue dans l'extrémité sortie du boîtier de bifurcation (58), dans lequel l'extrémité bâti de chacune de la pluralité de pattes de dérivation (60) est terminée par au moins un connecteur de fibres optiques secondaire, et dans lequel la pluralité de connecteurs de fibres optiques secondaires de la pluralité de pattes de dérivation (60) est configurée pour être connectée à des ports de connexion dans la pluralité de panneaux de répartition d'équipement montés dans le bâti d'équipement (32) ; et
le système de supports (90) selon l'une quelconque des revendications 1 à 8 monté sur le bâti d'équipement (32), dans lequel le premier support (92) et le second support (94) sont montés sur le bâti d'équipement (32) en une relation espacée pour définir une région d'engrènement entre eux,
dans lequel les boîtiers de bifurcation (58) de la pluralité de faisceaux de câbles (54) sont reçus dans la pluralité d'emplacements de bifurcation allongés (100) dans le premier support (92), et
dans lequel les pattes de dérivation (60) de la pluralité de faisceaux de câbles (54) sont reçues dans la pluralité d'emplacements de pattes allongés (112) dans le second support (94).

10. Bâti d'équipement (32) selon la revendication 9, dans lequel le nombre d'emplacements de pattes allongés (112) dans le second support (94) n'est pas inférieur au nombre de panneaux de répartition d'équipement dans le bâti d'équipement (32).

11. Bâti d'équipement (32) selon la revendication 9 ou 10, dans lequel chacun des faisceaux de câbles (54) comprend au moins une patte de dérivation (60) connectée à chacun de la pluralité de panneaux de répartition d'équipement dans le bâti d'équipement (32).

12. Bâti d'équipement (32) selon l'une quelconque des revendications 9 à 11, dans lequel le second support (94) est agencé de telle sorte que pour chacun de la pluralité de panneaux de répartition d'équipement dans le bâti d'équipement (32) existe un emplacement dédié de la pluralité d'emplacements de pattes allongés (112) dans le second support (94) qui reçoit les pattes de dérivation (60) qui sont optiquement connectées au panneau respectif de la pluralité de panneaux de répartition d'équipement.

13. Bâti d'équipement (32) selon l'une quelconque des revendications 9 à 12, dans lequel les boîtiers de bifurcation (58) de la pluralité de faisceaux de câbles (54) sont disposés en rangées dans la pluralité d'emplacements de bifurcation allongés (100) dans le premier support (92), et dans lequel la pluralité de pattes de dérivation (60) des faisceaux de câbles (54) dans chaque rangée est engrenée avec la pluralité d'emplacements de pattes allongés (112) dans le second support (94) afin de résider dans un plan d'engrènement commun.

14. Bâti d'équipement (32) selon l'une quelconque des revendications 9 à 13, dans lequel le bâti d'équipement comprend en outre un panneau de répartition principal monté sur le châssis, dans lequel le panneau principal comprend une pluralité de ports de connexion, et dans lequel au moins un connecteur primaire de chacun de la pluralité de faisceaux de câbles est connecté à un port respectif de la pluralité de ports de connexion du panneau de répartition principal.

15. Procédé d'installation d'un faisceau de câbles (54) dans un bâti d'équipement (32) d'un réseau de fibres optiques, le faisceau de câbles (54) comprenant :
un câble de fibres optiques (56) convoyant une pluralité de fibres optiques et présentant une extrémité réseau (70) et une extrémité bifurcation (72), l'extrémité réseau (70) comprenant au moins un connecteur de fibres optiques primaire terminant la pluralité de fibres optiques et configuré pour être connecté au réseau de fibres optiques ;
un boîtier de bifurcation (58) comprenant une extrémité câble et une extrémité dérivation, l'extrémité câble du boîtier de bifurcation (58) recevant l'extrémité bifurcation (72) du câble de fibres optiques (56) ; et
une pluralité de pattes de dérivation (60) présentant une extrémité bifurcation (80) et une extrémité bâti, dans lequel chacune de la pluralité de pattes de dérivation (60) est configurée pour porter au moins une fibre optique de la pluralité de fibres optiques, dans lequel l'extrémité bifurcation (80) de chacune de la pluralité de pattes de dérivation (60) est reçue dans l'extrémité dérivation du boîtier de bifurcation (58), dans lequel l'extrémité bâti de chacune de la pluralité de pattes de dérivation (60) est terminée par au moins un connecteur de fibres optiques secondaire,
le bâti d'équipement (32) comprenant le système de supports (90) selon l'une quelconque des revendications 9 à 14 monté sur le bâti d'équipement (32), dans lequel le premier support (92) et le second support (94) sont montés sur le bâti d'équipement (32) une en relation espacée pour définir une région d'engrènement entre eux,
le procédé comprenant :
i) le positionnement du boîtier de bifurcation (58) dans un de la pluralité d'emplacements de bifurcation allongés (100) dans le premier support (92) ;
ii) le routage de la pluralité de pattes de dérivation (60) vers un ou plusieurs de la pluralité d'emplacements de pattes allongés (112) dans le second support (94) ; et
iii) la connexion de la pluralité de connecteurs secondaires de la pluralité de pattes de dérivation (60) à un ou plusieurs de la pluralité de panneaux de répartition d'équipement montés dans le bâti d'équipement (32).
